# FASCICULE DE BREVET EUROPEEN

(11) **EP 1 398 473 B1**
(45) Date de publication et mention de la délivrance du brevet: **18.10.2006**
(21) Numéro de dépôt: 03362015.4
(22) Date de dépôt: 27.08.2003
(51) Int. Cl.: F02C 7/045

(54) **Couche acoustiquement resistive pour panneau d'atténuation acoustique, panneau utilisant une telle couche**
Schalldämpfende Schicht für eine schalldämpfende Platte und eine Platte mit einer solchen Schicht
Acoustic attenuation layer for an acoustic attenuation panel, and a panel with such a layer

(30) Priorité: 10.09.2002 FR 0211193
(43) Date de publication de la demande: 17.03.2004
(73) Titulaire: AIRBUS France, 31060 Toulouse (FR)
(72) Inventeur: Porte, Alain, 31770 Colomiers (FR); Pascal, Nathalie, 31770 Colomiers (FR); Thezelais, Sylvain, 31000 Toulouse (FR); Rambaud, Eric, 44840 Les Sorinieres (FR)
(74) Mandataire: Thébault, Jean-Louis

(56) Documents cités:
- EP-A- 0 572 725
- DE-A- 3 311 905
- GB-A- 1 480 743
- GB-A- 2 024 380
- US-A- 5 594 216
- US-A1- 2002 078 569

## Description

La présente invention se rapporte à une couche acoustiquement résistive pour panneau d'atténuation acoustique, plus particulièrement destiné aux panneaux en forme de conduit pour réacteur d'aéronef.

Les panneaux d'atténuation acoustique sont plus particulièrement destinés à être montés dans des parois de nacelles de réacteurs d'aéronefs, dans des carters de réacteurs ou dans des conduits devant être insonorisés.

Dans la pratique, ce type de panneau intègre une âme alvéolaire, telle qu'une structure en nid d'abeilles flanquée, côté onde sonore incidente, d'une couche acoustiquement résistive et, du côté opposé, d'un réflecteur arrière. En variante, ce type de panneau peut comprendre une superposition de structures en nid d'abeilles séparées par des couches acoustiquement résisitives.

Une couche acoustiquement résisitive est une structure poreuse à rôle dissipatif, c'est-à-dire transformant partiellement l'énergie acoustique de l'onde sonore la traversant en chaleur.

Cette couche acoustiquement résistive se caractérise notamment par un taux de surface ouverte qui varie essentiellement en fonction d'une part, du moteur et plus particulièrement de son champ de pression, et d'autre part, des composants constituant ladite couche.

Selon un premier mode de réalisation connu, cette couche résistive en forme de cylindre, est obtenue à partir de tôles formant des portions de cylindre, généralement deux ou quatre, reliées entre elles selon des génératrices du cylindre par des éclisses. Ces dernières constituent des zones de liaison où les portions peuvent se superposer et sont reliées par des moyens de liaison appropriés, tels que par collage ou rivetage, qui sont parfaitement étanches avec un taux de surface ouverte nul. Pour obtenir une structure ayant des caractéristiques mécaniques adéquates, les éclisses ont des surfaces relativement importantes.

On sait que ces éclisses influent de manière conséquente sur les caractéristiques acoustiques de la couche résistive en raison de la non homogénéité de sa surface globale, notamment au droit des zones de liaison. En effet, ces zones sont inactives, et ne laissent pas passer les ondes de manière à transformer partiellement l'énergie acoustique de l'onde sonore en chaleur.

Le brevet FR-2.698.910 mentionne ce phénomène et propose de réduire le nombre d'éclisses, au mieux de les supprimer. Il décrit également un mode de réalisation de la couche résistive à partir d'une seule tôle dont les bords latéraux sont reliés entre eux par une éclisse de manière à former un cylindre.

Même si ce mode de réalisation permet de réduire la surface des zones inactives, il ne donne pas entièrement satisfaction car il reste toujours une zone d'éclissage.

Pour pallier cet inconvénient, la demanderesse propose dans la demande de brevet FR-2.767.41 1, un procédé de réalisation d'une couche résistive ne comportant pas d'éclisse dans lequel la couche résistive comprend un tissu renforcé structurellement par un enroulement filamentaire. Toutefois, la mise en oeuvre de ce procédé est relativement complexe pour obtenir des caractéristiques mécaniques satisfaisantes. En effet, la mise en oeuvre des résines qui réalisent les liaisons mécaniques entre les différents constituants nécessite le contrôle de nombreux paramètres, notamment de température et de pression, qu'il est difficile de contrôler in situ de manière répétitive afin d'obtenir la même qualité de collage dans le temps.

Une autre solution proposée par la demanderesse dans la demande de brevet FR-01.03227 consiste à mettre en place la couche résistive acoustique par banderolage à partir d'un matériau poreux se présentant sous forme de bande.

Cette manière d'opérer non seulement permet d'éviter les zones non homogènes au point de vue acoustique de la couche poreuse rencontrée, comme indiqué plus haut, dans la technique habituelle de fabrication en deux demi-panneaux, mais également d'éliminer la nécessité de l'éclissage, le banderolage de la couche poreuse pouvant s'appliquer à la mise en place des autres couches, à savoir la couche structurale, l'âme centrale alvéolaire, le réflecteur arrière, en sorte de réaliser un panneau acoustique complet en un seul morceau sans éclisse.

L'absence d'éclisse permet d'augmenter la surface efficace acoustique du panneau, de diminuer sa masse et de réduire les temps et coûts de fabrication.

Si un tel panneau procure un amortissement acoustique de bonne qualité, cet amortissement n'est cependant pas optimal. En effet, les caractéristiques physiques de la couche résistive sont homogènes sur toute l'étendue du panneau et déterminées en considération de la valeur moyenne du bruit que l'on veut atténuer.

Or, les différents modes de propagation des ondes sonores se transforment au cours de leur propagation dans le canal de soufflante. En effet, certains modes subissent une forte atténuation alors que d'autres, au contraire, ne sont pratiquement pas affectés par le panneau acoustique. Dès lors, les caractéristiques du bruit à atténuer sont différentes d'un point à l'autre du canal. En conséquence, un panneau d'atténuation acoustique du type ci-dessus, en n'atténuant qu'un nombre limité de modes, ne permet pas un amortissement optimal du bruit.

Par ailleurs, selon ce mode de réalisation, les bords de la bande banderolée se retrouvent sensiblement perpendiculaires au flux s'écoulant dans le conduit si bien que la bande est facilement pelable sur son bord en contact avec l'écoulement aérodynamique. Ainsi, non seulement les qualités acoustiques du panneau sont dégradées, mais de plus, le panneau lui-même se dégrade et doit être changé, ce qui implique des coûts de maintenance et d'immobilisation de l'aéronef.

Toutes les solutions de l'art antérieur ont pour objectif commun de supprimer les éclisses ou zones de liaison afin d'augmenter la surface acoustique efficace de la couche résistive.

Le brevet US 2002/0078569 décrit une couche acoustiquement résistive selon le préambule de revendication 1.

La présente invention vise à pallier les inconvénients de l'art antérieur en proposant une couche acoustiquement résisitive pour panneau d'atténuation acoustique ayant de bonnes caractéristiques mécaniques et procurant un amortissement acoustique de bonne qualité.

A cet effet, l'invention a pour objet une couche acoustiquement résistive pour panneau d'atténuation acoustique formant un conduit dans lequel est susceptible de s'écouler un flux aérodynamique, destiné à un réacteur d'aéronef, ledit panneau comprenant au moins une couche acoustiquement résistive, au moins une structure alvéolaire et un réflecteur disposé à l'opposé de l'onde incidente caractérisée en ce que ladite couche acoustiquement résistive est constituée de bandes disposées selon le sens d'écoulement dudit flux, reliées entre elles par une pluralité d'éclisses assurant la reprise des efforts, lesdites éclisses ayant des surfaces faibles par rapport à la surface des bandes de manière à assurer la continuité du caractère homogène du taux de surface ouverte de la couche acoustiquement résistive ainsi formée.

Par éclisse, on entend la zone de liaison, inactive d'un point de vue acoustique, entre deux bandes adjacentes qui peut être de toutes formes, par exemple par chevauchement desdites bandes ou en utilisant une bande de jonction, et de toutes natures, par exemple par collage, rivetage ou analogue.

Selon une caractéristique de l'invention, les éclisses doivent avoir une largeur l au plus égale à la plus petite des valeurs suivantes:
- 15 mm;
- 28% de la largeur des bandes.

Contrairement à l'art antérieur qui vise à supprimer les éclisses ou moyens de liaison entre les panneaux formant la couche acoustiquement résistive, la présente invention vise à multiplier le nombre d'éclisses. En multipliant leur nombre, on répartit sur un plus grand nombre de zones la reprise des efforts mécaniques, notamment radiaux, si bien que contrairement aux éclisses de l'art antérieur qui ont des surfaces relativement conséquentes pour la reprise des efforts, ce qui nécessairement altère le caractère homogène de la couche acoustiquement résistive, les zones de liaison selon l'invention ont des surfaces très faibles qui n'altèrent pas le caractère homogène de la couche acoustiquement résistive.

La faible surface de chaque éclisse a pour conséquence de rendre lesdites éclisses transparentes d'un point de vue acoustique c'est-à-dire qu'elles n'engendrent sensiblement aucune perturbation sur le traitement des ondes acoustiques à atténuer contrairement aux éclisses de l'art antérieur dont les surfaces importantes constituent des surfaces inactives perturbant le traitement desdites ondes.

Selon cet agencement, les bords des bandes sont disposés selon la direction de l'écoulement du flux aérodynamique si bien qu'elles n'offrent aucune prise audit flux limitant ainsi les risques de délaminage.

Selon un premier mode de réalisation, les éclisses sont obtenues par chevauchement des bandes adjacentes.

Selon un deuxième mode de réalisation, les bandes sont juxtaposées et reliées deux à deux par des bandes de jonction dont les bord latéraux sont reliés aux bandes.

D'autres caractéristiques et avantages ressortiront de la description qui va suivre de l'invention, description donnée à titre d'exemple uniquement, en regard des dessins annexés sur lesquels:
- la figure 1 est une perspective d'une nacelle de turboréacteur d'aéronef,
- la figure 2 est une vue en coupe longitudinale de la nacelle de la figure 1,
- la figure 3 est une vue en coupe selon un plan perpendiculaire au sens d'écoulement du flux d'air d'un panneau d'atténuation acoustique en forme de conduit,
- la figure 4A est une vue en coupe selon un plan perpendiculaire au sens d'écoulement du flux d'air d'une couche résistive selon une première variante de l'invention,
- la figure 4B est une vue en coupe selon un plan perpendiculaire au sens d'écoulement du flux d'air d'une couche résistive selon une deuxième variante de l'invention,
- la figure 4C est une vue en coupe selon un plan perpendiculaire au sens d'écoulement du flux d'air d'une couche résistive selon une troisième variante de l'invention,
- la figure 5 est une vue en perspective illustrant en détail une portion de panneau d'atténuation acoustique selon l'invention, et
- la figure 6 est une vue de dessus illustrant un exemple de bande utilisée pour réaliser la couche résistive.

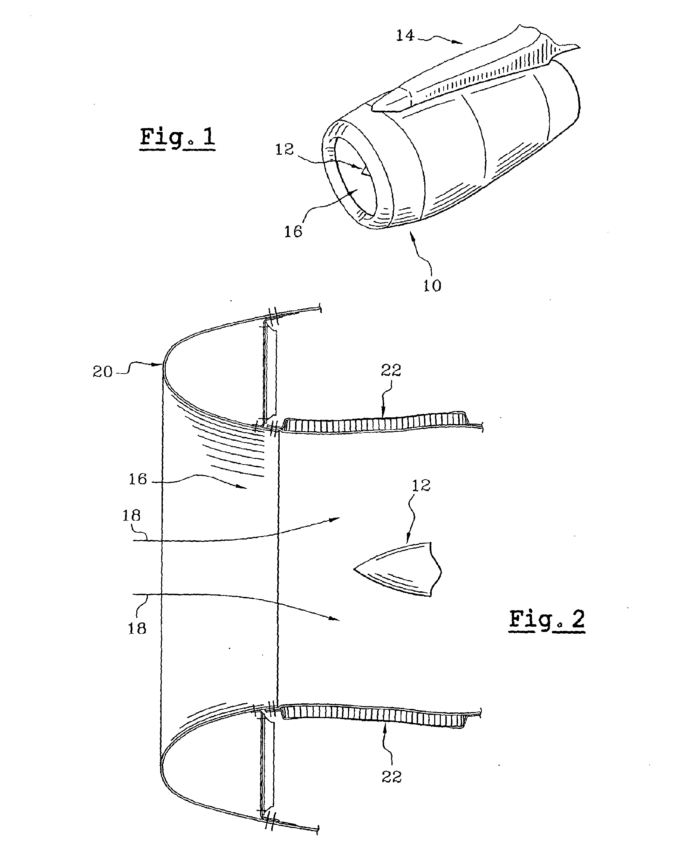

Sur la figure 1, on a représenté une nacelle 10 entourant coaxialement un moteur ou turbine 12, ladite nacelle étant reliée par le biais d'un mât 14 à une aile non représentée. Cette nacelle 10 forme à l'intérieur un conduit 16 dans lequel circule un flux aérodynamique ou d'air dont l'écoulement est matérialisé par les flèches référencées 18 sur la figure 2.

En amont de ce conduit d'air 16, la nacelle comprend une entrée d'air 20 ayant pour fonction d'assurer l'écoulement de l'air, d'une part, vers le conduit 16, et d'autre part, vers l'extérieur de la nacelle 10.

Ce conduit 16 comprend au niveau de sa surface un panneau d'atténuation acoustique 22 qui s'étend en partie ou sur la totalité de la longueur dudit conduit.

Ce panneau d'atténuation acoustique 22 a généralement une surface en contact avec le flux d'air 18 non cylindrique à section évolutive. Ainsi, les sections transversales ont des formes plus ou moins circulaires et les génératrices ne sont pas forcément rectilignes.

Pour simplifier les représentations, et dans un but de clarté, le panneau d'atténuation acoustique 22 aura une forme sensiblement cylindrique.

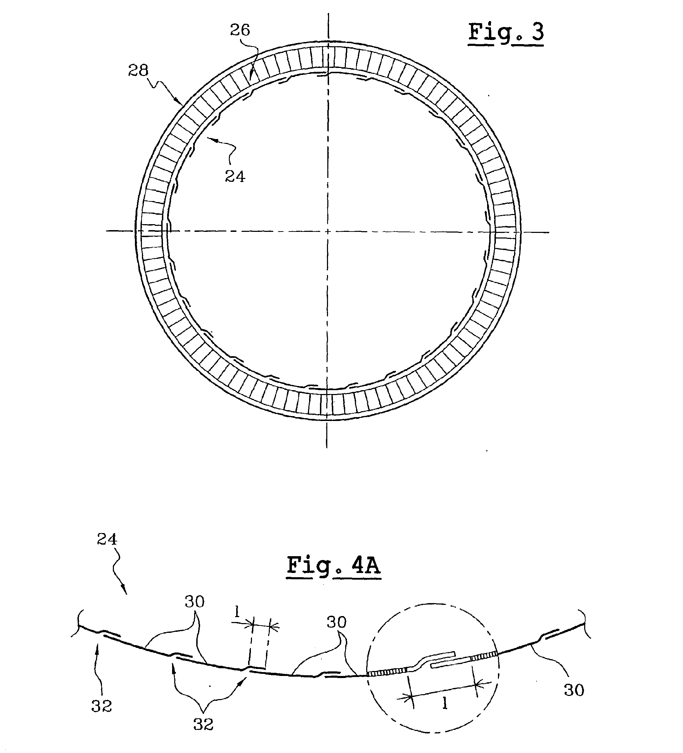

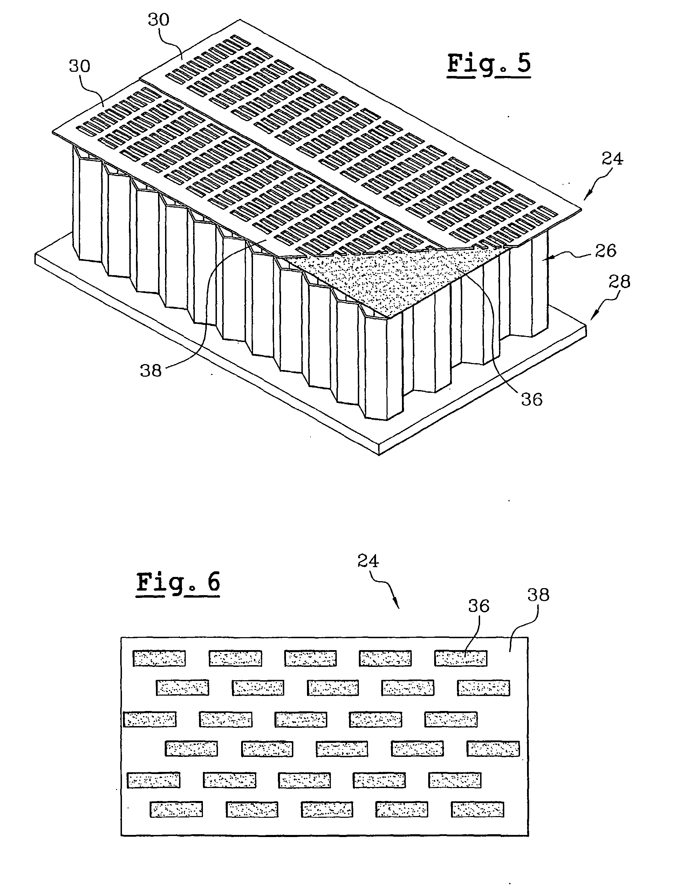

De façon connue, ce panneau 22 d'atténuation acoustique comprend de l'intérieur vers l'extérieur, comme illustré sur les figures 3 et 5, une couche acoustiquement résistive 24, une structure alvéolaire 26 et un réflecteur 28.

En variante, il peut comprendre plusieurs structures alvéolaires séparées par des couches acoustiquement résistives appelées dans ce cas septum.

Selon les cas, la structure alvéolaire 26 peut être obtenue à partir d'un panneau plan mis en forme de cylindre, de plusieurs panneaux plans mis en forme de portions de cylindre juxtaposés les uns aux autres ou d'au moins une bande banderolée.

De même, le réflecteur 28 peut être réalisé à partir d'une seule tôle mise en forme de cylindre, de plusieurs tôles juxtaposées ou chevauchantes, reliées par tout moyen approprié ou d'au moins une bande banderolée.

Ces deux éléments, structure alvéolaire 26 et réflecteur 28, ne sont pas décrits plus en détail, concernant notamment leur nature, car ils demeurent à la portée de l'homme de l'art et ne sont l'objet principal de cette demande.

La couche 24 acoustiquement résisitive se caractérise par un taux de surface ouverte que l'homme du métier ajuste en fonction notamment des éléments la constituant et du moteur. A titre d'exemple, pour une entrée d'air, pour une couche acoustiquement résistive mono-couche, le taux de surface ouverte varie de 12 à 20% et pour une bi-couche, de 24 à 34 %. Pour un inverseur de poussée, à couche acoustiquement résistive mono-couche, le taux de surface ouverte varie de 9 à 15% et pour une bi-couche de 15 à 25%.

Selon l'invention, la couche 24 acoustiquement résistive est constituée de bandes 30 comportant un taux de surface ouverte approprié, disposées selon le sens d'écoulement du flux d'air 18 et reliées entre elles par des éclisses 32 permettant à l'ensemble ainsi formé de résister aux efforts radiaux.

Par éclisse, on entend la zone de liaison, inactive d'un point de vue acoustique, entre deux bandes adjacentes qui peut être de toutes formes, par exemple par chevauchement desdites bandes ou en utilisant une bande de jonction, et de toutes natures, par exemple par collage, rivetage ou analogue.

Les bandes 30 peuvent être mono-couche ou multicouche.

Ainsi, selon un premier mode de réalisation, la bande 30 est obtenue à partir d'une tôle perforée de carbone imprégné de résine. Dans ce cas, l'épaisseur de la tôle confère à la bande ses caractéristiques mécaniques. La tôle pourra être constituée de fibres tissées assurant la reprise des efforts dans plusieurs directions ou non tissées afin d'assurer la reprise des efforts dans une direction prépondérante, la résine assurant la reprise des efforts dans les autres directions. La tôle peut être pré-percée ou percée une fois déposée sur le moule.

Selon un deuxième mode de réalisation, la bande 30 comprend au moins un constituant d'amortissement acoustique sous forme par exemple d'un tissu acoustique métallique et au moins un constituant de renfort structural sous forme par exemple de fibres pré-imprégnées d'une résine thermodurcissable ou thermoplastique ou d'un mélange de résines.

Sur les figures 5 et 6, on a représenté un mode de réalisation particulier d'une bande 30 composée d'une couche poreuse 36 et d'au moins une couche structurale 38 perforée percée de trous non-circulaires présentant chacun sa plus grande dimension parallèle à la direction des efforts principaux à supporter, ladite couche structurale étant disposée de préférence en contact du flux. Dans une application à des parois de nacelles de réacteurs, la plus grande dimension des trous est parallèle à l'axe longitudinal du moteur.

Suivant un mode de réalisation, la couche structurale perforée est constituée de fibres minérales ou organiques, naturelles ou synthétiques, imprégnées d'une résine thermodurcissable ou thermoplastique, polymérisée.

Les fibres peuvent être unidirectionnelles et parallèles notamment à ladite direction des efforts principaux.

Les fibres peuvent être également sous forme d'un tissu ou d'un empilage de tissus dont les fils de trame ou de chaîne sont parallèles à ladite direction des efforts principaux.

La forme des trous est choisie dans le groupe comprenant les formes rectangulaires, oblongues, hexagonales.

Les panneaux réalisés ainsi présentent l'avantage essentiel que la couche structurale ainsi perforée offre une matière entre les trous mieux distribuée, c'est-à-dire regroupée suivant l'un et/ou l'autre des deux axes privilégiés définis respectivement par la plus grande dimension et la plus petite dimension des trous.

En d'autres termes, ladite matière entre trous est regroupée en bandes ou couloirs plus larges entre les alignements de trous, permettant ainsi un transfert plus efficace des efforts.

En variante, la bande est composée d'une couche poreuse et d'au moins deux couches structurales perforées, une disposée en contact avec le flux aérodynamique et une autre en contact avec la structure alvéolaire.

Dans chaque cas, la bande nécessite la mise en oeuvre d'au moins une résine qui assure la liaison mécanique entre des éléments de même nature ou de natures différentes.

Ainsi, il est possible de concevoir les bandes 30 de manière industrielle garantissant une mise en oeuvre optimale de la ou des résines de manière à assurer une liaison mécanique solide entre les différents éléments et de qualité constante dans le temps, ce qui est rarement le cas lorsque les constituants formant la couche 24 acoustiquement résistive sont assemblés in situ lors de la formation du panneau d'atténuation acoustique.

Selon un autre avantage, les bords des bandes 30 sont disposés selon la direction de l'écoulement du flux d'air 18 si bien qu'elles n'offrent aucune prise audit flux limitant ainsi les risques de délaminage.

En disposant les bandes selon l'invention, le flux d'air en contact avec la surface de la paroi n'est pas perturbé et conserve son ou ses modes de propagation acoustique pour lequel ou lesquels la couche 24 acoustiquement résistive est adaptée.

Selon un autre avantage de cet agencement, contrairement au banderolage, la disposition dans le sens de l'écoulement permet d'ajuster sur la longueur du conduit les caractéristiques de la couche 24, notamment vis-à-vis des modes de propagation acoustique. Ainsi, il est plus facile de faire varier par exemple le taux de surface ouverte de la couche acoustiquement résistive le long du conduit en ajustant le taux de surface ouverte de chaque bande 30.

Contrairement aux évolutions de l'art antérieur, la présente invention va à contre-courant. En effet, alors que l'art antérieur vise à supprimer les éclisses ou moyens de liaison entre les panneaux formant la couche acoustiquement résistive, la présente invention vise à multiplier le nombre des éclisses 32.

En multipliant leur nombre, on répartit sur un plus grand nombre de zones 32 la reprise des efforts mécaniques, notamment radiaux, si bien que contrairement aux éclisses de l'art antérieur qui ont des surfaces relativement conséquentes pour la reprise des efforts, ce qui nécessairement altère le caractère homogène de la couche 24 acoustiquement résistive, les éclisses 32 selon l'invention ont des surfaces très faibles qui n'altèrent pas le caractère homogène de la couche 24 acoustiquement résistive.

Par homogénéité, on entend que le taux de surface ouverte ne doit pas varier de manière trop importante au niveau de la couche 24 acoustiquement résistive.

La faible surface de chaque éclisse a pour conséquence de rendre lesdites éclisses transparentes d'un point de vue acoustique c'est-à-dire qu'elles ne perturbent sensiblement pas le traitement des ondes acoustiques à atténuer, contrairement aux éclisses de l'art antérieur dont les surfaces importantes constituent des surfaces inactives perturbant le traitement desdites ondes.

Selon l'invention, les zones de liaison 32 ou zones inactives d'un point de vue acoustique, formant chacune une mini-éclisse, doivent avoir une largeur l au plus égale à la plus petite des valeurs suivantes:
- approximativement 15 mm;
- approximativement 28% de la largeur des bandes 30.

Ces valeurs ont été déterminées de manière expérimentale.

Sur les figures 4A à 4C, on a représenté de manière non exhaustive les différentes possibilités pour réaliser les liaisons entre deux bandes adjacentes.

Selon une première variante, illustrée par la figure 4A, les bords latéraux d'une même bande 30 sont disposés l'un au dessus de la bande adjacente et l'autre au dessous de l'autre bande adjacente, les zones superposées étant liées de manière appropriée, tel que par collage. Selon l'invention, il est important que la zone de liaison des bandes n'altère pas le caractère homogène du taux de surface ouverte de la couche acoustiquement résistive.

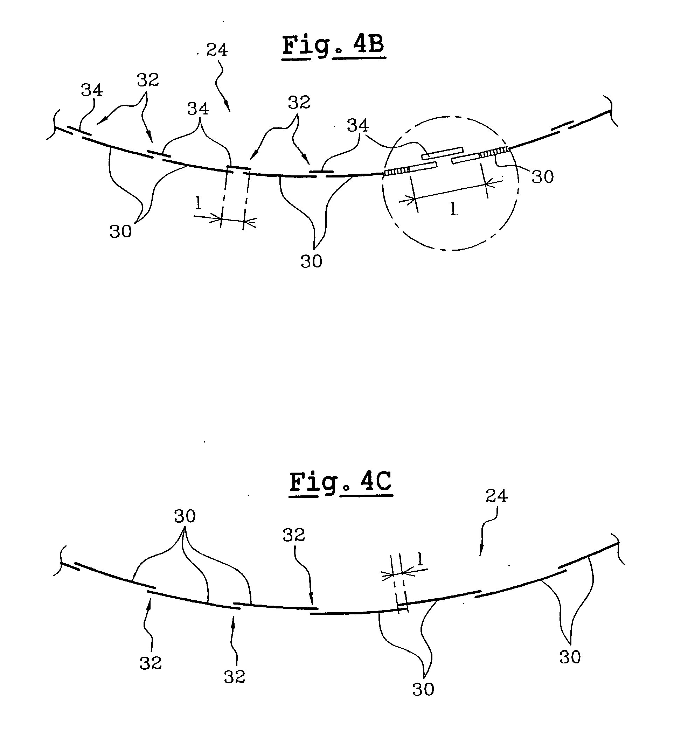

Selon une deuxième variante, illustrée par la figure 4B, les bandes 30 sont juxtaposées de manière jointive ou non, et chaque couple est relié par une bande de jonction 34 dont le taux de surface ouverte peut être nul, et dont les bords latéraux sont reliés aux bandes 30 par tout moyen approprié, tel que par collage. Selon l'invention, il est important que la zone de liaison n'altère pas le caractère homogène du taux de surface ouverte de la couche acoustiquement résistive.

Selon une troisième variante, illustrée par la figure 4C, les bandes 30 sont reliées entre elles par superposition de leurs bords latéraux qui sont liés par tout moyen approprié, tel que par collage. Dans ce cas, les bords latéraux d'une même bande 30 sont disposés tous les deux, soit au dessus des bords latéraux des bandes adjacentes, soit au dessous des bords latéraux des bandes adjacentes afin d'obtenir une disposition alternée des bandes 30.

Selon les modes de réalisation, l'éclisse ou zone de liaison inactive d'un point de vue acoustique peut correspondre seulement à la zone de recouvrement des bandes 30 lorsque ces dernières sont actives, notamment poreuses, sur toute leur largeur, ou bien à une zone légèrement plus large qui comprend la zone de recouvrement et les zones inactives adjacentes des bandes 30 lorsque ces dernières comportent des zones inactives, notamment non poreuses, au niveau de leurs bords latéraux comme illustré en détail sur la figure 4A.

De même, lorsqu'on a recours à une bande de jonction 34, l'éclisse ou zone de liaison inactive d'un point de vue acoustique peut correspondre seulement à la largeur de la bande de jonction lorsque les bandes 30 sont actives, notamment poreuses, sur toute leur largeur, ou bien à une zone légèrement plus large comprenant la bande de jonction ainsi que les zones inactives adjacentes des bandes 30 lorsque ces dernières comportent des zones inactives, notamment non poreuses, au niveau de leurs bords latéraux comme illustré en détail sur la figure 4B.

## Revendications

1. Couche acoustiquement résistive pour panneau d'atténuation acoustique (22) formant un conduit dans lequel est susceptible de s'écouler un flux aérodynamique (18), destiné à un réacteur d'aéronef, ledit panneau comprenant au moins une couche acoustiquement résistive (24), au moins une structure alvéolaire (26) et un réflecteur (28) disposé à l'opposé de l'onde incidente ladite couche acoustiquement résistive (24) étant constituée d'une pluralité de bandes, **caractérisée en ce que** les bandes (30) sont disposées selon le sens d'écoulement dudit flux (18) et reliées entre elles par une pluralité d'éclisses (32) assurant la reprise des efforts, lesdites éclisses (32) ayant des surfaces faibles par rapport à la surface des bandes (30) de manière à assurer la continuité du caractère homogène du taux de surface ouverte de la couche acoustiquement résistive ainsi formée.

2. Couche acoustiquement résistive selon la revendication 1, **caractérisée en ce que** les éclisses (32) doivent avoir une largeur l au plus égale à la plus petite des valeurs suivantes:
- 15 mm;
- 28% de la largeur des bandes (30).

3. Couche acoustiquement résistive selon la revendication 1 ou 2, **caractérisée en ce que** les éclisses (32) sont obtenues par chevauchement des bandes (30) adjacentes.

4. Couche acoustiquement résistive selon la revendication 3, **caractérisée en ce que** les bords latéraux d'une bande sont disposés l'un au-dessus de la bande adjacente et l'autre au-dessous de l'autre bande adjacente.

5. Couche acoustiquement résistive selon la revendication 3, **caractérisé en ce que** les bords latéraux d'une bande sont disposés tous les deux soit au-dessus des bandes adjacentes, soit au-dessous des bandes adjacentes.

6. Couche acoustiquement résistive selon la revendication 1 ou 2. **caractérisée en ce que** les bandes (30) sont juxtaposées et reliées deux à deux par des bandes de jonction (34) dont les bord latéraux sont reliés aux bandes (30).

7. Couche acoustiquement résistive selon l'une quelconque des revendications 1 à 6, **caractérisée en que** la bande comprend une tôle perforée.

8. Couche acoustiquement résistive selon la revendication 7, **caractérisée en ce que** la tôle est constituée de fibres minérales ou organiques, naturelles ou synthétiques, imprégnées d'une résine thermodurcissable ou thermoplastique, polymérisée.

9. Couche acoustiquement résistive selon l'une quelconque des revendications 1 à 6, **caractérisée en ce que** la bande comprend au moins un constituant d'amortissement acoustique et au moins un constituant de renfort structural.

10. Couche acoustiquement résistive selon la revendication 9, **caractérisé en ce que** la bande est constituée d'un constituant d'amortissement acoustique et d'un constituant de renfort structural en contact avec le flux d'air.

11. Couche acoustiquement résistive selon la revendication 9, **caractérisée en ce que** la bande est constituée d'un constituant d'amortissement acoustique et d'au moins deux constituants de renfort structural, l'un disposé au contact du flux d'air et un autre au contact de la structure alvéolaire.

12. Couche acoustiquement résistive selon l'une quelconque des revendications 9 ou 11, **caractérisée en ce que** le constituant d'amortissement acoustique est un tissu métallique.

13. Couche acoustiquement résistive selon l'une quelconque des revendications 9 à 12, **caractérisée en ce que** le constituant de renfort structural se présente sous la forme de fibres pré-imprégnées de résine.

14. Panneau d'atténuation acoustique comprenant une couche acoustiquement résistive selon l'une quelconque des revendications 1 à 13.

## Claims

1. Acoustically resistive layer for an acoustic attenuation panel (22) forming a conduit for an aerodynamic flow (18), intended for an aircraft jet engine, said panel comprising at least one acoustically resistive layer (24), at least one cellular structure (26) and a reflector (28) arranged opposite the incident wave, said acoustically resistive layer (24) being formed of a plurality of strips, **characterised in that** the strips (30) are arranged in the direction of said flow (18) and are interconnected by a plurality of splices (32) providing strain relief, said splices (32) having small surface areas relative to the surface area of the strips (30) so as to ensure the continuity of the homogeneous nature of the quantity of open surface area of the acoustically resistive layer thus formed.

2. Acoustically resistive layer according to claim 1, **characterised in that** the splices (32) have a width 1 that is at most equal to the smallest of the following values:
- 15 mm;
- 28% of the width of the strips (30).

3. Acoustically resistive layer according to claim 1 or 2, **characterised in that** the splices (32) are obtained by overlapping the adjacent strips (30).

4. Acoustically resistive layer according to claim 3, **characterised in that** the lateral edges of one strip are arranged one above the adjacent strip and the other below the other adjacent strip.

5. Acoustically resistive layer according to claim 3, **characterised in that** the lateral edges of one strip are arranged both either above the adjacent strips or below the adjacent strips.

6. Acoustically resistive layer according to claim 1 or 2, **characterised in that** the strips (30) are juxtaposed and connected in pairs by junction strips (34), the lateral edges of which are connected to the strips (30).

7. Acoustically resistive layer according to any one of Claims 1 to 6, **characterised in that** the strip comprises a perforated sheet.

8. Acoustically resistive layer according to claim 7, **characterised in that** the sheet is made of natural or synthetic, mineral or organic fibres which are impregnated with a thermosetting or thermoplastic resin and polymerized.

9. Acoustically resistive layer according to any one of claims 1 to 6, **characterised in that** the strip comprises at least one constituent for acoustic damping and at least one constituent for structural reinforcement.

10. Acoustically resistive layer according to claim 9, **characterised in that** the strip is formed of a constituent for acoustic damping and a constituent for structural reinforcement in contact with the air flow.

11. Acoustically resistive layer according to Claim 9, **characterised in that** the strip is formed of a constituent for acoustic damping and of at least two constituents for structural reinforcement, one in contact with the air flow and another in contact with the cellular structure.

12. Acoustically resistive layer according to any one of Claims 9 or 11, **characterised in that** the constituent for acoustic damping is a metallic fabric.

13. Acoustically resistive layer according to any one of claims 9 to 12, **characterised in that** the constituent for structural reinforcement is in the form of fibres that have been preimpregnated with resin.

14. Acoustic attenuation panel comprising an acoustically resistive layer according to any one of claims 1 to 13.

## Patentansprüche

1. Schallwiderstandsschicht für Schalldämmplatte (22), die einen Kanal bildet, in dem ein für ein Flugzeugstrahltriebwerk bestimmter aerodynamischer Fluss (18) strömen kann, wobei die Platte wenigstens eine Schallwiderstandsschicht (24), wenigstens eine Wabenstruktur (26) und einen gegenüber der auftreffenden Welle angeordneten Reflektor (28) umfasst, wobei die Schallwiderstandsschicht (24) aus mehreren Bändern gebildet ist, **dadurch gekennzeichnet, dass** die Bänder (30) in Strömungsrichtung des Flusses (18) angeordnet und miteinander durch mehrere Laschen (32), die die Aufnahme der Beanspruchungen sicherstellen, verbunden sind, wobei die Laschen (32) im Vergleich zum Flächeninhalt der Bänder (30) kleine Flächeninhalte besitzen, um die Kontinuität des homogenen Charakters des Anteils der offenen Oberfläche der auf diese Weise gebildeten Schallwiderstandsschicht sicherzustellen.

2. Schallwiderstandsschicht nach Anspruch 1, **dadurch gekennzeichnet, dass** die Laschen (32) eine Breite haben müssen, die höchstens gleich dem kleinsten der folgenden Werte ist:
- 15 mm;
- 28 % der Breite der Bänder (30).

3. Schallwiderstandsschicht nach Anspruch 1 oder 2, **dadurch gekennzeichnet, dass** die Laschen (32) durch Überlappung benachbarter Bänder (30) erhalten werden.

4. Schallwiderstandsschicht nach Anspruch 3, **dadurch gekennzeichnet, dass** von den seitlichen Rändern eines Bandes einer über dem einen benachbarten Band angeordnet ist und der andere unter dem anderen benachbarten Band angeordnet ist.

5. Schallwiderstandsschicht nach Anspruch 3, **dadurch gekennzeichnet, dass** beide seitlichen Ränder eines Bandes über den benachbarten Bändern oder unter den benachbarten Bändern angeordnet sind.

6. Schallwiderstandsschicht nach Anspruch 1 oder 2, **dadurch gekennzeichnet, dass** die Bänder (30) nebeneinander liegen und durch Verbindungsbänder (34), deren seitliche Ränder mit den Bändern (30) verbunden sind, paarweise verbunden sind.

7. Schallwiderstandsschicht nach einem der Ansprüche 1 bis 6, **dadurch gekennzeichnet, dass** das Band ein Lochblech umfasst.

8. Schallwiderstandsschicht nach Anspruch 7, **dadurch gekennzeichnet, dass** das Blech aus mineralischen oder organischen, natürlichen oder synthetischen Fasern gebildet ist, die mit einem wärmehärtbaren oder thermoplastischen polymerisierten Harz imprägniert sind.

9. Schallwiderstandsschicht nach einem der Ansprüche 1 bis 6, **dadurch gekennzeichnet, dass** das Band wenigstens eine Schalldämmkonstituente und wenigstens eine Strukturverstärkungskonstituente umfasst.

10. Schallwiderstandsschicht nach Anspruch 9, **dadurch gekennzeichnet, dass** das Band aus einer Schalldämmkonstituente und aus einer Strukturverstärkungskonstituente, die mit dem Luftstrom in Kontakt ist, gebildet ist.

11. Schallwiderstandsschicht nach Anspruch 9, **dadurch gekennzeichnet, dass** das Band aus einer Schalldämmkonstituente und aus wenigstens zwei Strukturverstärkungskonstituenten gebildet ist, wovon eine in Kontakt mit dem Luftstrom und die andere in Kontakt mit der Wabenstruktur angeordnet ist.

12. Schallwiderstandsschicht nach einem der Ansprüche 9 oder 11, **dadurch gekennzeichnet, dass** die Schalldämmkonstituente ein Metallgewebe ist.

13. Schallwiderstandsschicht nach einem der Ansprüche 9 bis 12, **dadurch gekennzeichnet, dass** die Strukturverstärkungskonstituente die Form vorimprägnierter Harzfasern aufweist.

14. Schalldämmplatte, die eine Schallwiderstandsschicht nach einem der Ansprüche 1 bis 13 umfasst.
